Europäisches Patentamt

European Patent Office

Office européen des brevets

(11) Publication number: **0 467 453 A1**

# EUROPEAN PATENT APPLICATION

(21) Application number: **91201784.5**

(22) Date of filing: **09.07.91**

(51) Int. Cl.5: **B65G 57/18**, B65G 47/92

(30) Priority: **17.07.90 IT 2095790**

(43) Date of publication of application:
**22.01.92 Bulletin 92/04**

(84) Designated Contracting States:
**AT BE CH DE DK ES FR GB GR IT LI LU NL SE**

(71) Applicant: **CASAGRANDE TECHINT S.r.l.**
**Via S. Egidio**
**I-33074 Fontanafredda, PN(IT)**

Applicant: **POMINI FARREL S.p.A.**
**Via Leonardo da Vinci 20**
**I-21053 Castellanza Varese(IT)**

(72) Inventor: **Frosutto, Gianni**
**Via Oberdan, 16**
**I-33042 Buttrio, Udine(IT)**
Inventor: **Mansutti, Franco**
**Via M. Buonarroti, 5**
**I-33010 Feletto Umberto, Udine(IT)**

(74) Representative: **Faraggiana, Vittorio, Dr. Ing.**
**Ingg. Guzzi e Ravizza S.r.l. Via Boccaccio, 24**
**I-20123 Milano(IT)**

(54) **Packaging unit with double magnet.**

(57) A packaging unit (40) is fed through a conveyor (51) with section bars (52) stacked in layers. Said unit (40) comprises two arms (41) rocking alternately as scissors and each bearing a carriage (48, 148) with magnets (42, 142). The carriages (48, 148) run with reciprocating motion along guides (44) on the arms (41) during their scissors motion to move from a position (A) of taking the layers (52) from the conveyor (51) and a position (B) of delivery of the layers (52) to a package forming device (43).

Fig.2

The object of the present invention is a packaging unit for coupled section bars in a duplicate cycle which calls for duplication of the pick-up cycle, coupling or deposit of the section bars to drastically reduce packaging time. Packagers for the formation of packages of section bars in alternate and overturned layers in which one layer calls for 'n' section bars and the next layer 'n-1' overturned section bars are known.

Known packagers display a plurality of drawbacks. A first drawback consists of the fact that the section bars and the rolled sections in general treated in said packager are subject to a dragging action which, especially for flat section bars and the like, involves problems of quality of the package because the section bars tend to cross each other.

A second drawback consists of the fact that cycle times are too long for the cycle requirements called for by modern production rates.

To obviate these drawbacks the applicant has developed a packager with duplicate cycle in accordance with the main claim.

The dependent claims characterize particular aspects of the invention.

The invention calls for two layer forming magnets operating longitudinally and alternately in such a manner that the layer forming magnets are placed outside the space occupied and do not interfere with the other machines and require less longitudinal space for the installation.

In addition, the packaging unit is mobile so that it is positionable longitudinally to the installation at will and thus permits operation whether on the plant, on the packer or on the layer receiving unit. In addition, the double rate simplifies and reduces the cycle times.

The invention is also particularly secure in holding large bars, contrary to what takes place with revolving devices of the known art.

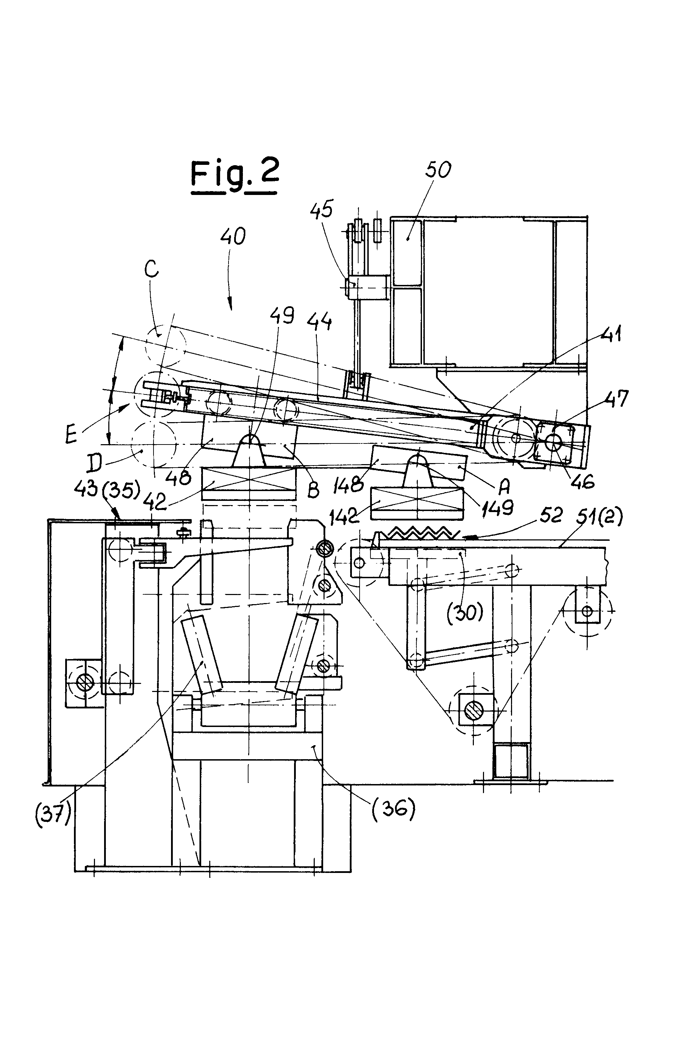

The packing unit is interlocked by a series of devices, not illustrated in the annexed FIG. 2 and offered as an example, which have the function of forming the layers of section bars in 'n' and 'n-1' alternating numbers and conveying them to the packaging unit which is the object of the invention.

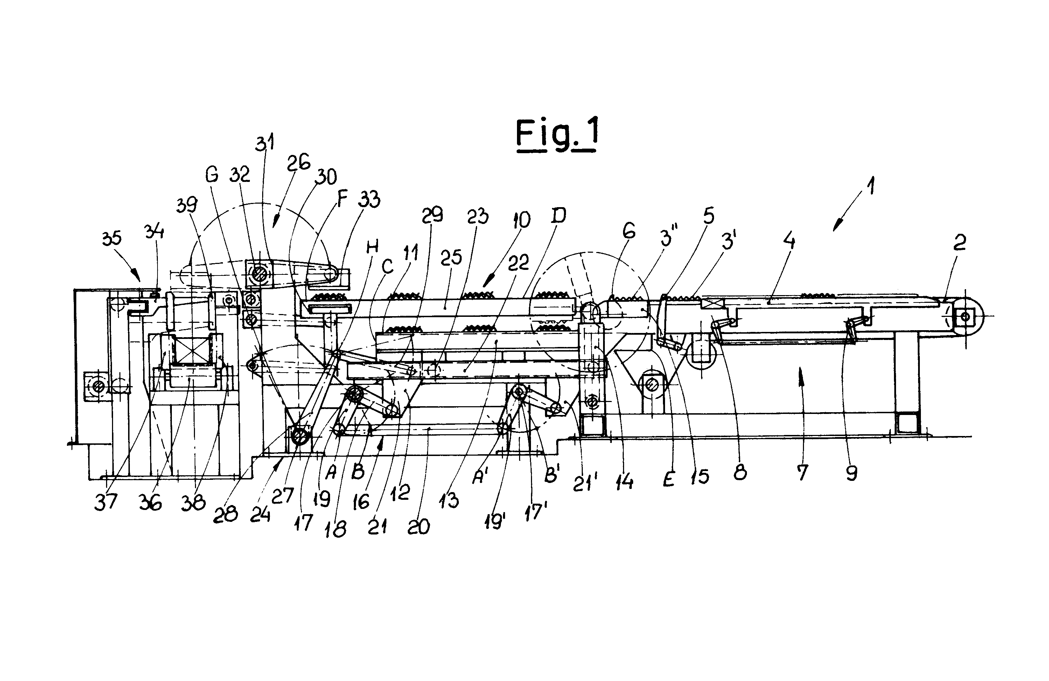

Said devices, amply described in IT 21621 A/88 in the name of the same applicant, the only annexed drawing of which constitutes FIG. 1 of the present application, comprise:
- a conveyor of rolled section bars, and
- means of hoisting a predetermined plurality of section bars, and
- a device for pick-up, formation and transfer of the double layer of section bars, said device consisting essentially of a series of fixed blades, a hoister and a rotating device equipped with magnets designed to turn over

and transfer the layers of rolled section bars.

Then the section bars reach the packaging unit which is the object of the present invention after being handled by the above mentioned devices and already placed in alternating stacks.

Hence the present invention is in replacement of the unit 26 shown in said FIG. 1 and indicated as package formation means.

FIG. 1 is not described since said IT 21621 A/88 is incorporated herein by reference.

In FIG. 2 which illustrates specifically the invention inserted in the solution of FIG. 1 the references between parentheses indicate identical positions present in FIG. 1.

The package formation unit 40 consists of two arms 41 moving vertically and alternately as scissors with their rocking axis at 46.

Said arms 41 display, running reciprocally back and forth thereon, respective carriages 48-148 each bearing a respective magnet 42-142.

The magnets 42-142 are supported and hinged at 49-149 so that they can remain with their lower face always substantially horizontal while at the same time adapting to the layers.

The rocking of the arms 41 is indicated at the end positions C and D and intermediate position E.

The back and forth movement of the carriages 48-148 is obtained by a kinematic mechanism at will which in the case illustrated consists of a closed loop chain driven by an end pulley 47.

The arms 41 and related magnets 42, 142 are placed outside the space occupied and do not interfere with the other machines, also requiring less longitudinal space than the packagers of the known art.

The packaging unit 40 is placed on a beam 50 which can be mounted on a carriage so that said packager 40 is longitudinally mobile in relation to the conveyor 51 at will.

The operation of the packaging unit 40 is with a double rate so that the operations of formation of the package are simplified and the cycle times reduced.

The two magnets 42, 142 placed one for each arm 41 move longitudinally and simultaneously but with reciprocating motion.

In this manner, while the magnet 42 is in the position A of taking the layers 52 of section bars the magnet 142 is in position B of delivery of the layers to a package former 43.

With this operation there is a nearly continuous formation of packages, zeroing or greatly reducing the dead times and thus achieving the objects of the invention.

The magnets 42, 142 complete their back and forth movement from position A to position B and vice versa directed in their path by the guides 44 of the arms 41.

Suitable means of vertical reciprocating movement 45 are provided to supply the correct and reciprocal position of vertical training of the two arms 41 so that the magnets 42, 142 in their longitudinal movement do not interfere with the layers of transiting section bars born by the magnets 142, 42.

Said means of alternating vertical movement 45 raise and lower the two arms 41 alternately, said arms rocking at 46.

Said means 45 can be with lever arms, cables, piston, i.e. of any other type.

In this manner the magnet 42, which is in position B, delivers the layers to the package former 43 and then is hoisted by the associated arm 41 to which it is anchored to return to position A and be lowered to take another layer of section bars.

The same operations are completed by the magnet 142 simultaneously with the magnet 42 but alternating therewith.

## Claims

1. Packaging unit (40) cooperating with devices for conveying, taking, formation and transfer of double layers of section bars of the type illustrated in IT 21621 A/88 characterized in that it consists of two arms (41) rocking alternately as scissors (46) and each bearing a carriage (48-148) bearing magnets (42-142), said carriages (48-148) moving longitudinally and reciprocally on the guides (44) of said arms (41) from a position (A) of taking the layers to a position (B) of delivery of the layers and vice versa with alternating rhythm.

2. Packaging unit (40) in accordance with claim 1 characterized in that the arms (41) and the respective magnets (42, 142) are above and outside the space occupied by the operating machines.

3. Packaging unit (40) in accordance with claim 1 or 2 characterized in that it is placed on a carriage born beam (50) placed above the conveyor (51) suitable for desired longitudinal movements.

4. Packaging unit (40) in accordance with any of the above claims characterized in that the two carriages (48-148) are operated by at least one single drive device (47) placed at one end thereof.

5. Packaging unit (40) in accordance with any of the above claims characterized in that it is provided with means (45) of alternating vertical movement of the two arms so that the carriages (48-148) running on said arms (41) do not interfere with each other.

6. Packaging unit (40) in accordance with any of the above claims characterized in that the magnets (42-142) are anchored in a rocking manner (49) under the carriages (48-148).

# Fig.1

4

# Fig.2

European
Patent Office

EUROPEAN SEARCH
REPORT

Application Number

EP 91 20 1784

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 425 396   (P. CAPRETTI)<br>* claims 1-3; figures *<br>– – – | 1-3,5 | B 65 G 57/18<br>B 65 G 47/92 |
| Y,A | DE-A-1 900 556   (OFFICINE MECCANICHE DANIELI)<br>* page 5, line 18 - page 6, line 16; figure 2 *<br>– – – | 1-3,5,4 | |
| A | EP-A-0 188 033   (G.B. BOUCHERIE N.V.)<br>* page 6, line 12 - line 31; figures *<br>– – – – – | 1,4,5 | |

| TECHNICAL FIELDS SEARCHED (Int. Cl.5) |
|---|
| B 65 G<br>B 65 B |

The present search report has been drawn up for all claims

| Place of search | Date of completion of search | Examiner |
|---|---|---|
| The Hague | 03 October 91 | VAN ROLLEGHEM F.M. |